# EUROPEAN PATENT SPECIFICATION

(11) **EP 2 355 582 B1**
(45) Date of publication and mention of the grant of the patent: **21.03.2018**
(21) Application number: 10290035.4
(22) Date of filing: 22.01.2010
(51) Int. Cl.: H04W 36/00, H04W 36/24

(54) **Managing handover of a terminal and associated terminal**
Verwaltung der Übergabe eines Endgerätes und zugehöriges Endgerät
Gestion du transfert d'un terminal et terminal associé

(43) Date of publication of application: 10.08.2011
(73) Proprietor: ALCATEL LUCENT, 92100 Boulogne-Billancourt (FR)
(72) Inventor: Orlandi, Barbara, Route de Villejust 91620 Nozay (FR); Marce, Olivier, Route de Villejust 91620 Nozay (FR); Barth, Dominique, Route de Villejust 91620 Nozay (FR); Kloul, Leila, Route de Villejust 91620 Nozay (FR); Bellahsene, Samir, Route de Villejust 91620 Nozay (FR)
(74) Representative: Berthier, Karine

(56) References cited:
- EP-A1- 1 670 278
- EP-A1- 1 708 526
- EP-A1- 2 009 932
- WO-A1-2009/079316
- PAUL BOONE ET AL: "Strategies for Fast Scanning and Handovers in WiMAX/802.16" ACCESS NETWORKS&WORKSHOPS, 2007. ACCESSNETS '07. SECOND INTER NATIONAL CONFERENCE ON, IEEE, PI, 22 August 2007 (2007-08-22), pages 1-7, XP002532107 ISBN: 978-1-4244-1149-8

## Description

The present invention relates to the management of handover of a terminal between cells of one or more wireless communication networks.

A wireless communication network defines a coverage area generally divided into cells. Each cell covers a defined area for providing to terminals in the network radio connection transmitted by corresponding attachment points.

When the terminal moves, a handover process allows to transfer the terminal from one cell to another cell.

To make it possible, the network indicates to the terminal the neighboring cells to be measured and then the terminal returns results of performed measurements and based on those measurements the network chooses the cell to perform handover.

However, the terminal may not have time to measure all the cells suggested by the network and usually tries the first cell on the list to provide suitable measurements even if this first listed cell is not the best cell for performing handover.

Moreover, in case of a quick loss of coverage, the network may require handover to a cell that was not necessarily measured by the terminal, this kind of scenario being called "blind handover".

Thus, the network may not provide the most relevant cell or set of cells to ensure best performance of handovers.

Document WO 2009/079316 A1 shows a moving mobile terminal MT. For each cell, the MT keeps a history of the successful/unsuccessful handover to its neighbour cells and applies a weighting factor according to the handover success rate. The threshold for reporting a measurement report - based on the received neighbouring cell list NCL - is artificially lowered for the historically most promising cell compared to other cells indicated in the neighbour cell list.

One object of the invention is to overcome the drawback of state of the art.

This objective is achieved according to the invention by a method for managing handover of a terminal between cells according to independent claim 1 and by a corresponding terminal according to independent claim 14. Preferred embodiments are defined by the dependent claims.

With such a method, former displacements, road trips and/or habits of the user are taken into account and current algorithms for determining the best cell for a handover are simplified and performances of handover improved.

Further details and advantages of the invention will become apparent from the exemplary embodiments explained below with reference to figures, in which:
- figure 1 is a schematic block diagram of a radio network controller for use in a wireless communication network,
- figure 2 is a schematic block diagram of a terminal for use in a wireless communication network,
- figure 3a schematically illustrates a first embodiment of a wireless communication network according to the invention with macro diversity for determining an appropriate cell to be connected to,
- figure 3b schematically illustrates the first embodiment of a wireless communication network according to the invention with macro diversity for performing handover based on said appropriate cell determination,
- figure 4a schematically illustrates a second embodiment of a wireless communication network according to the invention with no macro diversity for determining an appropriate cell to be connected to,
- figure 4b schematically illustrates the second embodiment of a wireless communication network according to the invention with no macro diversity for performing handover based on said appropriate cell determination,
- figure 5a schematically illustrates a third embodiment of a wireless communication network according to the invention in case of blind handover,
- figure 5b schematically illustrates a fourth embodiment of a wireless communication network according to the invention in case of blind handover.

These figures relate to embodiments of a handover method in a wireless communication network, like UMTS for Universal Mobile Telecommunication System.

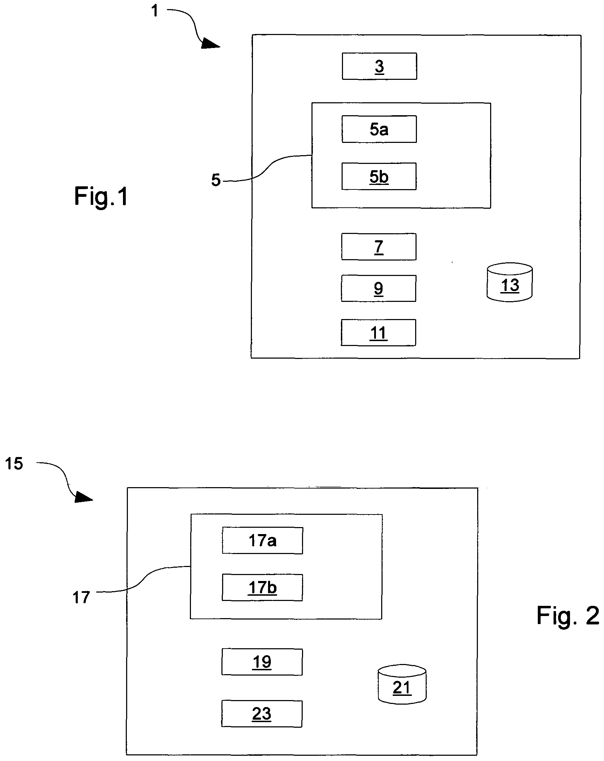

Figure 1 shows a schematic block diagram of a Radio Network Controller (RNC) 1 in accordance with the present invention for use in the wireless communication network. In a UMTS network it is the RNC which controls handovers.

According to the embodiment of figure 1, RNC 1 comprises means 3 for providing a neighboring cells list to be measured, transceiving means 5, evaluating means 7, handover controlling means 9 and optionally predicting means 11, and storing means 13. Within transceiving means 5, RNC 1 comprises means 5a for sending a request and/or a neighboring cells list to be measured and means 5b for receiving information on measurements on signals from neighboring cells in said communication network.

Figure 2 shows a schematic block diagram of a terminal 15, such as a mobile telephone, in accordance with the present invention for use in a wireless communication network.

Terminal 15, also called user equipment, comprises transceiving means 17 including receiving means 17a and means 17b for providing information measurements on signals from neighboring cells, such as measurement reports.

Besides transceiving means 17, terminal 15 further comprises means 19 for measuring said signals from neighboring cells, as known by a person skilled in the art, e.g. signal to interference plus noise ratio (SINR), carrier to interference plus noise ratio (CINR) or even received signal strength indication (RSSI).

Furthermore, terminal 15 comprises storing means 21 and predicting means 23.

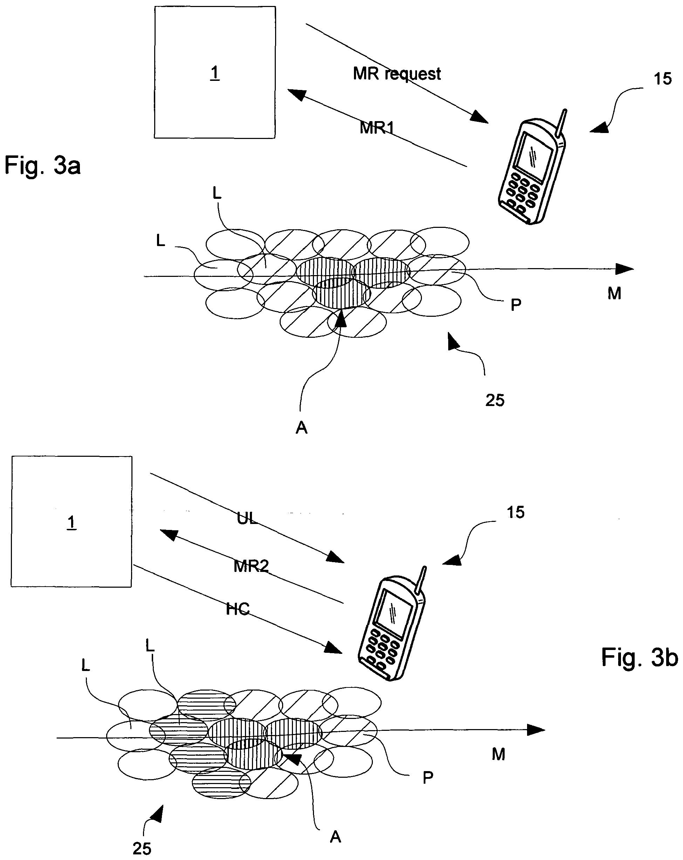

Operation of RNC 1 (figure 1) and terminal 15 (figure 2) will now be explained in detail with reference to embodiments of a method for managing handover in accordance with the present invention as depicted in figures 3a to 5b.

### First embodiment of the method with macro-diversity

Figures 3a and 3b schematically illustrate a first embodiment of the method in accordance with the present invention in a network with macro-diversity.

Referring to figure 3a, there is depicted a wireless communication network comprising RNC 1 and terminal 15, and cells 25 defining the coverage area of the network. Those cells 25 include :
- an active set of cells A, illustrated with vertical hatching, which terminal 15 is currently connected to, and
- neighboring cells illustrated with diagonal hatching.

Here, terminal 15 is connected to three cells A, of course terminal 15 may be connected to more or less active cells if necessary.

According to the embodiment of figure 3a, terminal 15 sends to RNC 1 for example in the form of a measurement report MR1, measurement results on signals from neighboring cells, e.g. on demand after receiving measurement report MR request from sending means 5a of RNC 1 (figure 1) or periodically. To this end, terminal 15 uses its measuring means 19 (figure 2).

Moreover, terminal 15 collects mobility information of terminal 15, which means in this embodiment, former cells which terminal 15 has been connected to during a displacement of terminal 15. An example of such cells available for communication during a former recorded displacement of terminal 15, is shown by arrow M on figure 3a.

To this end, terminal 15 may be observed during a predetermined time period, like a week. By instance, daily displacements of the user of terminal 15 for example for going to work and coming back may be stored.

Historical mobility information stored by instance in storing means 21 (figure 2) of terminal 15 comprises those former cells. Of course, other information associated to displacements of terminal 15 in reference may be stored, such as time of day or periodicity of such displacement.

By storing such information directly in terminal 15, privacy aspects of the user are respected. Moreover, storing such information by RNC 1 for all terminals in the network would require too many resources.

Further, terminal 15 also stores for example in storing means 21, a predetermined number of previous cells which terminal 15 has been connected to, such as the last two cells L (figure 3a).

Thus, knowing on one hand the active set of cells A and the last two cells L, and on the other hand historical mobility information stored during former displacements of terminal 15, terminal 15 can determine that an appropriate cell available for communication to be connected to is cell P. This determination can result from a prediction algorithm performed by terminal 15. To this end, terminal 15 can use its storing means 21 and its predicting means 23 (figure 2).

In consequence, together with information on measurement results, in this example as a measurement report MR1, terminal 15 sends to RNC 1 information about this predicted appropriate cell P (figure 3a).

RNC 1 receives both information relating to measurement results and predicted appropriate cell P, through its receiving means 5b and can store them in its storing means 13.

Then RNC 1 can update in consequence the neighboring cells list to be measured. That means, predicted appropriate cell P can be set on the top of the list, so that measurements are first performed for predicted appropriate cell P. Further, based on the predicted appropriate cell P, some cells can be set at the end or even removed from the list of neighboring cells to be measured. As shown in figure 3b, cells with horizontal hatching being far from predicted appropriate cell P can be set at the end or removed from the updated list UL.

Moreover, besides predicted appropriate cell P information, another field may be added to existing signaling messages such as measurement report MR1 : terminal 15 may also send information about previous cells to which terminal 15 has been connected to. More precisely, terminal 15 can send information about a predetermined number of the previous cells such as the last two cells L.

Receiving such information, RNC 1 can also perform a prediction algorithm for updating neighboring cells list to be measured.

Referring to figures 1, 2 and 3b, RNC 1 sends through its sending means 5b the updated list UL of neighboring cells to be measured to terminal 15 which in turn receives it through its receiving means 17a and performs required measurements of cells of the updated list UL by instance with measuring means 19. Measuring first appropriate predicted cell P, terminal 15 does not loose time in measuring cells with low probability for allowing effective handover and spends more time for measuring most potential cells.

Then, terminal 15 sends back to RNC 1 those new measurement results, by instance in form of measurement report MR2 through transceiving means 17b.

Using its receiving means 5b and evaluating means 7 (figure 1), RNC 1 can determine if predicted appropriate cell P is effectively the best cell for performing handover. These evaluating means 7 may comprise comparing means for comparing measurements on signals from predicted appropriate cell P with a predetermined threshold.

When RNC 1 concludes that predicted appropriate cell P is the best one, RNC 1 sends a handover command HC (figure 3b) to terminal 15 for adding cell P in the active set using by instance its handover controlling means 9 and sending means 5a.

Of course, for such a decision, RNC 1 may take into consideration other information for example received from other terminals in the network, such as respective predicted cell information in order to command handover on the most relevant cell for each terminal in the network.

It is obvious that cells of the active set with no more sufficient radio signal quality are removed from the active set, and terminal 15 is no more connected to them.

### Second embodiment of the method with no macro-diversity

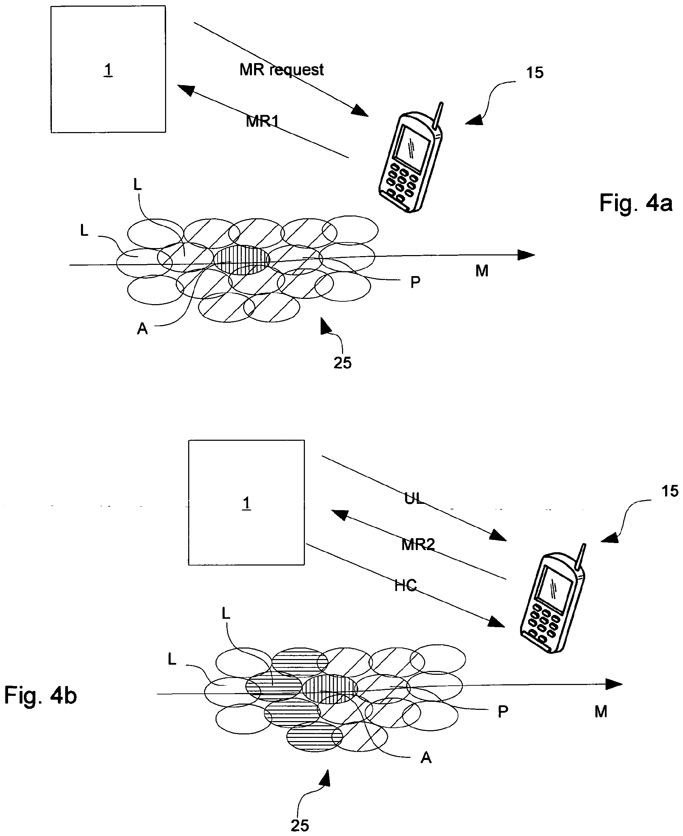

A second embodiment is illustrated on figures 4a, 4b. The operation of RNC 1 and terminal 15 according to this second embodiment is similar to the first embodiment illustrated by figures 3a, 3b previously explained and will not be detailed. Yet, this second embodiment differs from the first one in that there is no macro diversity. Consequently, terminal 15 is connected to a single active cell A, and not to a set of cells as described above. Thus, if RNC 1 determines that predicted appropriate cell P is effectively the best one, RNC 1 sends a handover command HC to terminal 15 for performing handover on this predicted cell P.

### Third embodiment: blind handover with a first example of recorded displacement of terminal

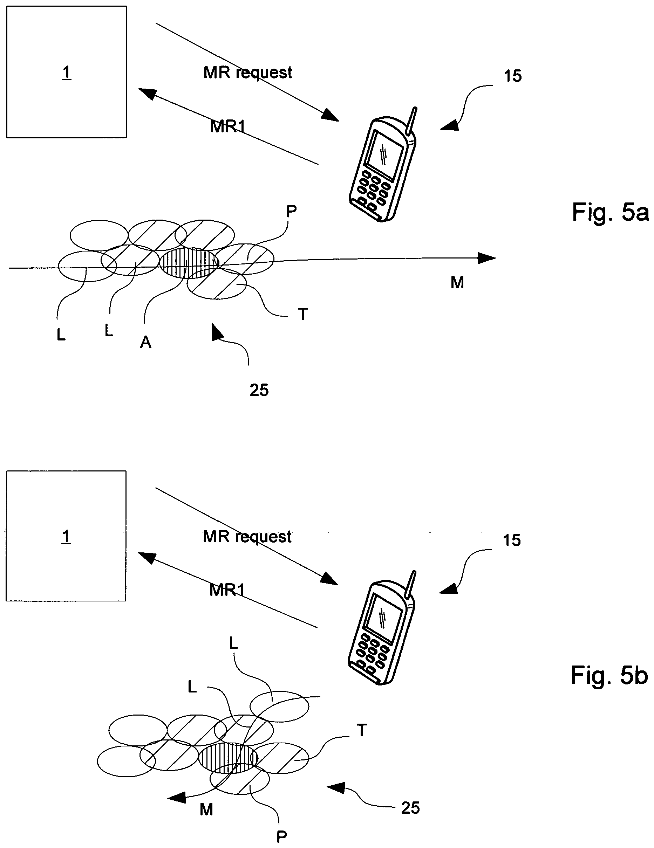

According to a third embodiment schematically illustrated in figure 5a, so called blind handover may be initiated on a predefined target cell T as known by the person skilled in the art, for example in case of a quick loss of coverage, when terminal 15 may not have time to perform measurements on neighboring cells when radio signal quality of the active cell drops.

Such a predefined target cell T specified in advance before the initiation of blind handover is schematically represented by the hatched cell T.

This third embodiment differs from the second one illustrated in figures 4a and 4b, in that after receiving information on measurement results, in this example as a measurement report MR1, and information about predicted cell P, if radio signal quality of active cell A decreases, for example drops below a predefined threshold, RNC 1 can decide to perform handover on predicted cell P without requesting further measurement on this predicted cell P, or without sending an updated list of neighboring cells to be measured. To this end, RNC 1 accesses to previous measurement results and predicted appropriate cell P information stored for example in its storing means 13 (figure 1). That reduces the risk of failure during handover.

### Fourth embodiment: blind handover with a second example of recorded displacement of terminal

Finally, figure 5b illustrates a fourth embodiment whose only difference with third embodiment illustrated in figure 5a, is the cells stored for a different displacement of terminal 15 in the historical mobility information, and conceptually illustrated by arrow M.

In the above description a UMTS network has been considered. Of course, another kind of network may be considered, like LTE network for Long Term Evolution. In this case, an evolved Node B performs the function of RNC 1 as handover controller. More networks can be mentioned, like WCDMA for Wideband Code Division Multiple Access Evaluation and WiMAX for Worldwide interoperability for Microwave Access.

Further, handover according to the invention may be performed between cells that operate on the same frequencies, as well as on different frequencies.

Furthermore, handover between cells of heterogeneous networks may be considered according to the IEEE (Institute of Electrical and Electronics Engineers) 802.21 media independent handover protocol. For example, terminal 15 may be handed over between cells of a LTE network and cells of a UMTS network. A server with information about the different networks manages this handover instead of RNC 1 or evolved Node B. For this purpose, harmonizing filters may be applied on the signals measurements from cells of different networks to provide a comparison basis for those different kind of measurements. After this harmonization, it is possible for the server to estimate the best cell for performing handover.

Consequently, with such a method, the network provides the most relevant cell to ensure best performance and success rate of handovers. Moreover, for handover or blind handover, for a given terminal 15, the predicted appropriate cell P is adapted to this terminal 15 as it is based on terminal 15 historical mobility information.

## Claims

1. Method for managing handover of a terminal (15) between cells (25), said method comprising the steps of:
- by said terminal, performing measurements (MR1) on signals from neighboring cells,
- by said terminal, determining an appropriate cell (P) to connect to based on historical mobility information of said terminal (15) stored by said terminal (15), wherein said historical mobility information comprises information on former cells which said terminal (15) has been connected to during former displacements of said terminal (15),
- by said terminal, sending information related to said measurements (MR1) and information related to said appropriate cell (P) including information identifying that this cell has been determined as the appropriate cell (P), to a handover controller of the network,
- performing handover based on both said measurements (MR1) and said appropriate cell (P) information.

2. Method according to claim 1, wherein said terminal (15) performs a prediction algorithm for determining said appropriate cell (P).

3. Method according to one of claims 1 and 2, wherein information relating to a predetermined number of previous cells (L) which said terminal was connected to is used for determining said appropriate cell (P).

4. Method according to claim 3, wherein information relating to the last two cells (L) is used.

5. Method according to one of claims 1 to 4, wherein said method comprises a step of updating a neighboring cells list to be measured based on information on said appropriate cell (P), before sending said updated list (UL) to said terminal (15).

6. Method according to claim 5, wherein said list (UL) is updated by setting said appropriate cell (P) on top of said list so that said appropriate cell (P) is among the firsts to be measured.

7. Method according to claim 6, wherein said terminal (15) is connected to said appropriate cell (P) if its radio signal quality reaches a predetermined threshold.

8. Method according to one of claims 1 to 4, wherein a blind handover is performed when no further measurement can be performed and wherein said terminal is connected to said appropriate cell (P).

9. Method according to one of the previous claims, wherein said method comprises a step of by said terminal (15) sending information relative to previous cells (L) which terminal (15) has been connected to.

10. Method according to claim 9, wherein information on the last two cells (L) is transmitted.

11. Method according to claim 5 together with claim 9 or 10, wherein said method comprises a step of by the handover controller performing a prediction algorithm based on transmitted information for updating the neighboring cells list to be measured before sending said updated list (UL) to said terminal (15).

12. Method according to one of claims 1 to 11, wherein said handover is performed between cells (25) of a single wireless communication network.

13. Method according to one of claims 1 to 11, wherein said handover is performed between cells (25) of heterogeneous wireless communication networks.

14. Terminal comprising means for :
- performing measurements on signals from neighboring cells,
- determining an appropriate cell (P) to connect to based on historical mobility information of said terminal (15) stored by said terminal (15), wherein said historical mobility information comprises information on former cells which said terminal (15) has been connected to during former displacements of said terminal (15),
- sending to a handover controller of the network information related to performed measurements and information related to said appropriate cell (P) including information identifying that this cell has been determined as the appropriate cell (P).

## Patentansprüche

1. Verfahren zum Verwalten der Übergabe eines Endgeräts (15) zwischen Zellen (25), wobei besagtes Verfahren die Schritte umfasst:
- durch besagtes Endgerät das Durchführen von Messungen (MR1) an Signalen von benachbarten Zellen,
- durch besagtes Endgerät das Bestimmen einer geeigneten Zelle (P) zum Verbinden, beruhend auf der historischen Mobilitätsinformation von besagtem Endgerät (15), gespeichert durch besagtes Endgerät (15), wobei besagte historische Mobilitätsinformation Information über frühere Zellen umfasst, mit denen besagtes Endgerät (15) während früherer Verschiebungen von besagtem Endgerät (15) verbunden war,
- durch besagtes Endgerät das Senden von Information bezogen auf besagte Messungen (MR1) und Information bezogen auf besagte geeignete Zelle (P), einschließlich Information, die identifiziert, dass diese Zelle als geeignete Zelle (P) bestimmt wurde, an eine Übergabesteuerung des Netzwerks,
- Durchführen einer Übergabe beruhend auf sowohl den besagten Messungen (MR1) als auch auf Information der geeigneten Zelle (P).

2. Verfahren nach Anspruch 1, wobei besagtes Endgerät (15) einen Vorhersagealgorithmus zum Bestimmen von besagter geeigneter Zelle (P) ausführt.

3. Verfahren nach einem der Ansprüche 1 und 2, wobei Information bezüglich einer bestimmten Anzahl von vorigen Zellen (L), mit denen besagtes Endgerät verbunden war, verwendet wird zum Bestimmen von besagter geeigneter Zelle (P).

4. Verfahren nach Anspruch 3, wobei die Information bezüglich der letzten beiden Zellen (L) verwendet wird.

5. Verfahren nach einem der Ansprüche 1 bis 4, wobei besagtes Verfahren den Schritt des Aktualisierens einer zu messenden Nachbarzellenliste beruhend auf Information über besagte geeignete Zelle (P) umfasst, vor dem Senden der besagten aktualisierten Liste (UL) an besagtes Endgerät (15).

6. Verfahren nach Anspruch 5, wobei besagte Liste (UL) aktualisiert wird durch das Setzen der geeigneten Zelle (P) an die Spitze von besagter Liste, sodass die besagte geeignete Zelle (P) zu den ersten zu messenden Zellen gehört.

7. Verfahren nach Anspruch 6, wobei besagtes Endgerät (15) mit besagter geeigneten Zelle (P) verbunden ist, wenn die Funksignalqualität einen vorbestimmten Schwellenwert erreicht.

8. Verfahren nach einem der Ansprüche 1 bis 4, wobei eine blinde Übergabe durchgeführt wird, wenn keine weitere Messung durchgeführt werden kann, und wobei besagtes Endgerät mit besagter geeigneter Zelle (P) verbunden ist.

9. Verfahren nach einem der vorstehenden Ansprüche, wobei besagtes Verfahren einen Schritt des Sendens von Information durch besagtes Endgerät (15) bezüglich voriger Zellen (L) umfasst, mit denen das Endgerät (15) verbunden war.

10. Verfahren nach Anspruch 9, wobei die Information über die letzten beiden Zellen (L) übertragen wurde.

11. Verfahren nach Anspruch 5 zusammen mit Anspruch 9 oder 10, wobei besagtes Verfahren einen Schritt des Durchführens eines Vorhersagealgorithmus durch die Übergabesteuerung umfasst, beruhend auf übertragener Information zum Aktualisieren der zu messenden Nachbarzellenliste vor dem Senden besagter aktualisierter Liste (UL) an besagtes Endgerät (15).

12. Verfahren nach einem der Ansprüche 1 bis 11, wobei besagte Übergabe durchgeführt wird zwischen Zellen (25) eines einzigen drahtlosen Kommunikationsnetzwerks.

13. Verfahren nach einem der Ansprüche 1 bis 11, wobei besagte Übergabe durchgeführt wird zwischen Zellen (25) eines heterogenen drahtlosen Kommunikationsnetzwerks.

14. Endgerät, umfassend Mittel zum:
- Durchführen von Messungen an Signalen vor benachbarten Zellen,
- Bestimmen einer geeigneten Zelle (P) zum Verbinden, beruhend auf der historischen Mobilitätsinformation von besagtem Endgerät (15), gespeichert durch besagtes Endgerät (15), wobei besagte historische Mobilitätsinformation Information über frühere Zellen umfasst, mit denen besagtes Endgerät (15) während früherer Verschiebungen von besagtem Endgerät (15) verbunden war,
- Senden an eine Übergabesteuerung von der Netzwerkinformation bezogen auf durchgeführte Messungen und Information bezogen auf besagte geeignete Zelle (P), einschließlich Information, die identifiziert, dass diese Zelle als geeignete Zelle (P) bestimmt wurde.

## Revendications

1. Procédé de gestion de transfert inter-cellulaire d'un terminal (15) entre des cellules (25), ledit procédé comprenant les étapes suivantes :
- par ledit terminal, effectuer des mesures (MR1) sur les signaux provenant des cellules voisines,
- par ledit terminal, déterminer une cellule appropriée (P) à laquelle se connecter d'après les informations historiques de mobilité dudit terminal (15) enregistrées par ledit terminal (15), lesdites informations historiques de mobilité comprenant des informations sur les cellules précédentes auxquelles ledit terminal (15) a été connecté lors des déplacements précédents dudit terminal (15),
- par ledit terminal, envoyer les informations relatives auxdites mesures (MR1) et les informations relatives à ladite cellule appropriée (P) y compris les informations identifiant le fait que cette cellule a été déterminée comme étant la cellule appropriée (P), à un contrôleur de transfert inter-cellulaire du réseau,
- réaliser un transfert inter-cellulaire d'après les informations relatives à la fois auxdites mesures (MR1) et à ladite cellule appropriée (P).

2. Procédé selon la revendication 1, dans lequel ledit terminal (15) exécute un algorithme de prédiction pour déterminer ladite cellule appropriée (P).

3. Procédé selon l'une des revendications 1 et 2, dans lequel les informations relatives à un nombre prédéterminé de cellules précédentes (L) auxquelles ledit terminal a été connecté sont utilisées pour déterminer ladite cellule appropriée (P).

4. Procédé selon la revendication 3, dans lequel les informations relatives aux deux dernières cellules (L) sont utilisées.

5. Procédé selon l'une des revendications 1 à 4, dans lequel ledit procédé comprend une étape de mise à jour d'une liste de cellules voisines sur lesquelles effectuer des mesures d'après les informations sur ladite cellule appropriée (P), avant d'envoyer ladite liste mise à jour (UL) audit terminal (15).

6. Procédé selon la revendication 5, dans lequel ladite liste (UL) est mise à jour en plaçant ladite cellule appropriée (P) en tête de ladite liste de sorte que ladite cellule appropriée (P) soit parmi les premières sur lesquelles effectuer des mesures.

7. Procédé selon la revendication 6, dans lequel ledit terminal (15) est connecté à ladite cellule appropriée (P) si la qualité de son signal radio atteint un seuil prédéterminé.

8. Procédé selon l'une des revendications 1 à 4, dans lequel un transfert inter-cellulaire en aveugle est réalisé lorsqu'aucune autre mesure ne peut être effectuée et dans lequel ledit terminal est connecté à ladite cellule appropriée (P).

9. Procédé selon l'une des revendications précédentes, dans lequel ledit procédé comprend une étape dans laquelle ledit terminal (15) envoie des informations relatives aux cellules précédentes (L) auxquelles ledit terminal (15) a été connecté.

10. Procédé selon la revendication 9, dans lequel les informations sur les deux dernières cellules (L) sont transmises.

11. Procédé selon la revendication 5 ainsi que la revendication 9 ou 10, dans lequel ledit procédé comprend une étape dans laquelle le contrôleur de transfert inter-cellulaire exécute un algorithme de prédiction d'après les informations transmises pour mettre à jour la liste des cellules voisines sur lesquelles effectuer des mesures avant d'envoyer ladite liste mise à jour (UL) audit terminal (15).

12. Procédé selon l'une des revendications 1 à 11, dans lequel ledit transfert inter-cellulaire est réalisé entre des cellules (25) d'un seul réseau de communication sans fil.

13. Procédé selon l'une des revendications 1 à 11, dans lequel ledit transfert inter-cellulaire est réalisé entre des cellules (25) de réseaux de communication sans fil hétérogènes.

14. Terminal comprenant des moyens pour :
- effectuer des mesures sur les signaux de cellules voisines,
- déterminer une cellule appropriée (P) à laquelle se connecter d'après les informations historiques de mobilité dudit terminal (15) enregistrées par ledit terminal (15), lesdites informations historiques de mobilité comprenant des informations sur les cellules précédentes auxquelles ledit terminal (15) a été connecté lors des précédents déplacements dudit terminal (15),
- envoyer à un contrôleur de transfert inter-cellulaire du réseau les informations relatives aux mesures effectuées et les informations relatives à ladite cellule appropriée (P) y compris les informations identifiant le fait que cette cellule a été déterminée comme étant la cellule appropriée (P).
